# EUROPEAN PATENT SPECIFICATION

(11) **EP 0 867 955 B1**
(45) Date of publication and mention of the grant of the patent: **19.05.2004**
(21) Application number: 98302265.8
(22) Date of filing: 25.03.1998
(51) Int. Cl.: H01M 4/02, H01M 10/40

(54) **Non-aqueous electrolyte secondary battery**
Sekundärbatterie mit nichtwässerigem Elektrolyten
Batterie secondaire à électrolyte non-aqueux

(30) Priority: 26.03.1997 JP 7417097
(43) Date of publication of application: 30.09.1998
(73) Proprietor: SEIKO INSTRUMENTS INC., Chiba-shi, Chiba 261 (JP)
(72) Inventor: Watanabe, Shunji, Mihama-ku, Chiba-shi, Chiba (JP); Sakata, Akifumi, Mihama-ku, Chiba-shi, Chiba (JP); Onodera, Hideharu, Mihama-ku, Chiba-shi, Chiba (JP); Sakai, Tsugio, Mihama-ku, Chiba-shi, Chiba (JP); Tahara, Kensuke, Mihama-ku, Chiba-shi, Chiba (JP); Takasugi, Shinichi, Mihama-ku, Chiba-shi, Chiba (JP)
(74) Representative: Sturt, Clifford Mark

(56) References cited:
- EP-A- 0 460 617
- EP-A- 0 651 450
- EP-A- 0 664 570
- EP-A- 0 789 412
- DE-A- 4 320 140
- US-A- 4 814 242
- US-A- 5 262 255
- DATABASE INSPEC INSTITUTE OF ELECTRICAL ENGINEERS, STEVENAGE, GB Inspec No. 5647169, COURTNEY I A ET AL: "Electrochemical and in situ X-ray diffraction studies of the reaction of lithium with tin oxide composites" XP002072396 -& JOURNAL OF THE ELECTROCHEMICAL SOCIETY, JUNE 1997, ELECTROCHEM. SOC, USA, vol. 144, no. 6, ISSN 0013-4651, pages 2045-2052, XP002072409
- J ET AL: "Small particle size multiphase Li-alloy anodes for lithium-ion -batteries" SOLID STATE IONICS, vol. 90, no. 1-4, September 1996, page 281-287 XP004071677
- PATENT ABSTRACTS OF JAPAN vol. 096, no. 001, 31 January 1996 & JP 07 235293 A (FUJI PHOTO FILM CO LTD), 5 September 1995,
- PATENT ABSTRACTS OF JAPAN vol. 018, no. 681 (E-1649), 21 December 1994 & JP 06 275268 A (SEIKO INSTR INC;OTHERS: 01), 30 September 1994,

## Description

The present invention relates to a non-aqueous electrolyte secondary battery using non-aqueous electrolyte with lithium ion-conductivity in which material capable of incorporating and releasing lithium is used as negative and positive active materials.

Conventionally, secondary batteries for memory backup or clocks have mainly been batteries that are charged at 3 V or more. As the operating voltage of instruments has become lower, secondary batteries for memory backup or for clocks also need only produce lower voltages. For example, batteries are earnestly desired which are charged at 2.5 V and are used at a final discharge voltage of up to 1.2 V. However, at present, there are no commercially available secondary batteries for memory backup or for clocks in this voltage range. Instead, a capacitor having a small capacitance is used.

Tin has conventionally been known as a material which can dope and undope lithium (J. Electrochem. Soc. Vol. 128, No. 4, Page 725). However, if plate-like tin is doped with lithium, it involves a large volume expansion. This fact, has the result that it is difficult to prepare a battery having a good cycle characteristic. The reason is considered to be that the material is repeatedly subjected to volume changes by repeated cycles and as a result tin separates from the plate-like material and no longer participates in charge and discharge cycle.

Further, in the conventional case where tin and lithium alloy have been used as an active material, Li-Sn alloy obtained by metallurgically heat melting tin and lithium has been used. In this case, the Li-Sn alloy is liable to be oxidized by oxygen or moisture in the air. Accordingly, the atomic ratio of Li to Sn must be as small as 1 or less or almost all of the production steps must be conducted in dry air or an inert gas atmosphere. Thus, there is suffered a problem that the production becomes complicated and the production costs are thereby increased.

As shown in Japanese Patent Application Laid-open No. Hei 6-275268, tin oxide represented by SnO is a material capable of doping and undoping. However, because the tin oxide has low potential to lithium and is liable to be reduced up to metallic Sn, it was not feasible to constitute a battery that is charged at 2.5 V and is used at a final discharge voltage up to 1.2 V by using SnO as a positive electrode active material having a potential to lithium of 3 V.

Further, It is known in Japanese Patent Application Laid-open Nos. Hei 7-122274 and Hei 7-235293 that if one continues to add lithium to SnO or rutile structure SnO₂, the crystal structure becomes amorphous. It can reversibly act as a negative electrode material of a secondary battery. Where SnO or rutile structure SnO₂ is used, it is essential that it is not reduced up to metallic Sn and that it becomes amorphous. Its structure can easily be confirmed by X ray diffraction. However, since the conditions for amorphous formation are difficult and potential to lithium is low, it is not feasible to produce a battery which is charged at 2.5 V and which is used at a final discharge voltage up to 1.2 V.

Conventional tin oxide has been suitable for a battery that is charged at 3.5 to 5 V and which is used at a final discharge voltage up to about 2 V. This is in combination with a lithium-containing manganese oxide having a potential to lithium of 3 V. Similarly, batteries are known which are charged at 4.5 to 4 V and used at a final discharge voltage up to about 3V. This is in combination with a lithium-containing cobalt oxide having a voltage to lithium of 4 V or the like.

Tin has conventionally been known as a material that can dope and undope lithium. However, if plate-like tin is doped, a large volume expansion is involved. Therefore, it has been difficult to prepare a battery having good cycle characteristics. This is considered to be due to the fact that tin which is subject to repeated volume change by repeated cycles is liberated from the plate-like tin while containing lithium and does not participate in the charge and discharge cycle. Further, tin having lithium sufficiently doped therein has low potential. Thus, it has been difficult to form a battery which is discharged at 2.5 V and which is used at a final discharge voltage up to 1.2 V in combination with cobalt oxide or manganese oxide.

According to the present invention, there is provided a non-aqueous electrolyte secondary battery, characterized by using a negative electrode comprising a powdery tin or tin alloy which is obtained by reducing oxide of tin by electrochemical reaction of oxide of tin with lithium or material containing lithium inside a battery after assembling the battery, or inside or outside the battery in the course of battery production, a powdery carbon with electron conductivity and a resin binder, a positive electrode having as an active material a metal oxide containing a transition metal as a constituent element, and a non-aqueous electrolyte with lithium ion conductivity comprised of a lithium compound dissolved or solid solubilized in an organic solvent.

The positive electrode may have as an active material a metal oxide which is represented by an atomic ratio of Li:Mn:O = x:1:y (2 < y < 3), and the maximum value which the atomic ratio of Li can have in discharging is in the range of 0.66<x<0.90.

Embodiments of the present invention will now be described by way of example only and with reference to the accompanying drawings, in which:-
Fig. 1 is a cross sectional view showing a test cell used for performance evaluation of a negative electrode material,
Fig. 2 is a graph showing charge and discharge characteristics using Sn as a working electrode,
Fig. 3 is a graph showing charge and discharge characteristics using SnO as a working electrode,
Fig. 4 is an X ray diffraction pattern of SnO before and after charge and discharge,
Fig. 5 is an X ray diffraction pattern of Sn before and after charge and discharge,
Fig. 6 is an X ray diffraction pattern after press-fixing lithium to a SnO working electrode and dipping it in an electrolyte solution,
Fig. 7 is a cross sectional view showing a coin type lithium secondary battery according to the present invention,
Fig. 8 is a graph showing the number of cycles and change of discharge capacity when Sn is used as an active material, and
Fig. 9 is a graph showing the number of cycles and change of discharge capacity when SnO is used as an active material.

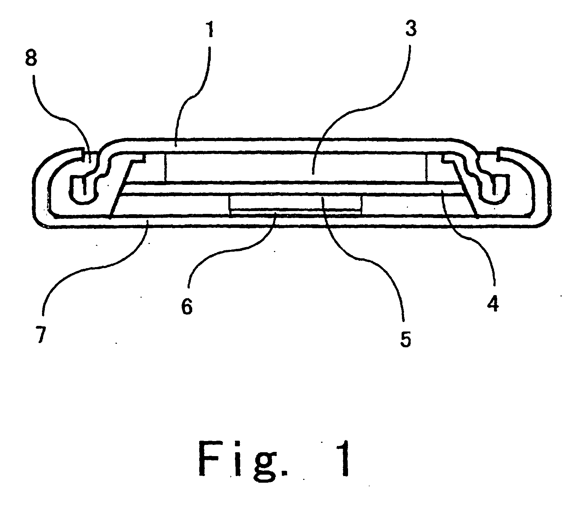

Fig. 1 is a cross sectional view showing one example of a test cell used for evaluation of charge and discharge characteristics of an active material in the non-aqueous electrolyte secondary battery according to the present invention. In the Figure, a counter electrode case 1 which also serves as a counter electrode terminal is formed by drawing a plate made of stainless steel having Ni-plated on its outer surface. A counter electrode 3 is formed by punching a lithium foil having a predetermined thickness and a diameter of 14 mm, and press-fixing it to the inside of the counter electrode case 1. A working electrode case 7 is made of stainless steel having Ni-plated on its outer surface. Case 7 serves as a working electrode terminal. A working electrode 5 is constituted using an active material according to the present invention, as described later. A working electrode collector 6 consists of a conductive adhesive containing carbon. It bonds the working electrode 5 and the working electrode case 7, thereby electrically connecting those compoents. A separator 4 is comprised of a porous film of polypropylene, and has an electrolyte impregnated therein. A gasket 8 is mainly comprised of polypropylene, and is interposed between the counter electrode case 1 and the working electrode case 7. It provides electrical insulation between the counter electrode and the working electrode. An open edge of the working electrode case 7 is bent inwardly and caulked, thereby sealing and encapsulating the battery contents therein. The electrolyte used is one in which 1 mol/l of lithium hexafluorophosphate is dissolved in a mixed solvent of ethylene carbonate and ethyl methyl carbonate in 1 : 1 volume ratio. The size of the test cell had an outer diameter of 20 mm and a thickness of 1.6 mm.

The working electrode 5 was prepared as follows. Commercially available Sn was ground and graded with an automatic mortar. The resulting material was used as an active material of the working electrode. Graphite as a conductive material and polyvinylidene fluoride or the like as a binder were added to this active material, in the weight ratio of 45 : 10, respectively, thereby providing a working electrode mixture.

This working electrode mixture was press-molded at 2 ton/cm² into a pellet having a diameter of 4.05 mm and a thickness of 0.3 mm, thus forming the working electrode 5. Thereafter, the working electrode 5 thus obtained was bonded to the working electrode case 7. This was done using the working electrode collector 6 comprising a conductive resin binder containing carbon as a conductive filler to form an unitary body. The unitary body was heat dried at 150°C for 8 hours under a reduced pressure, to thus obtain the above-mentioned test cell A.

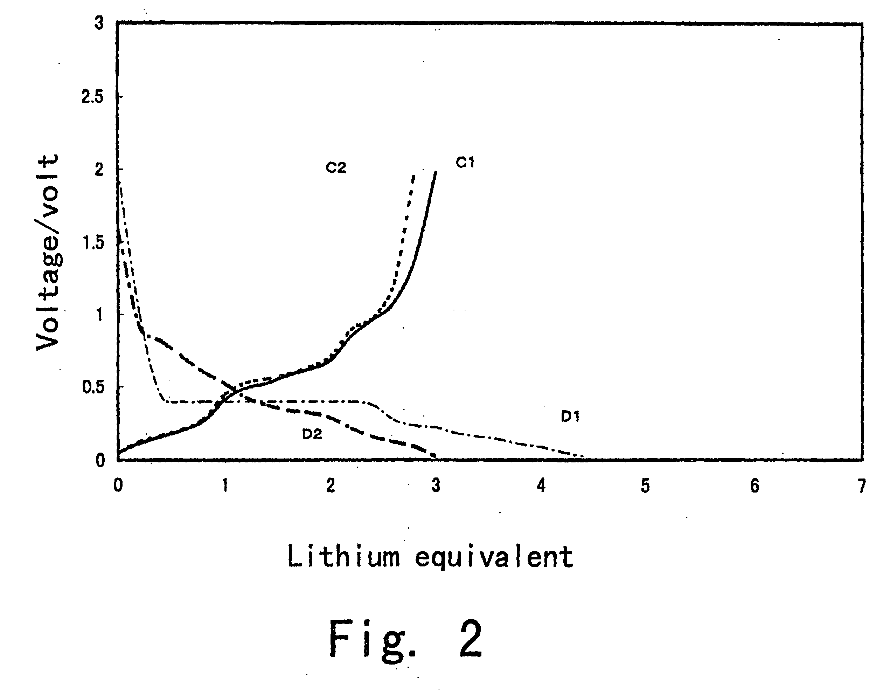

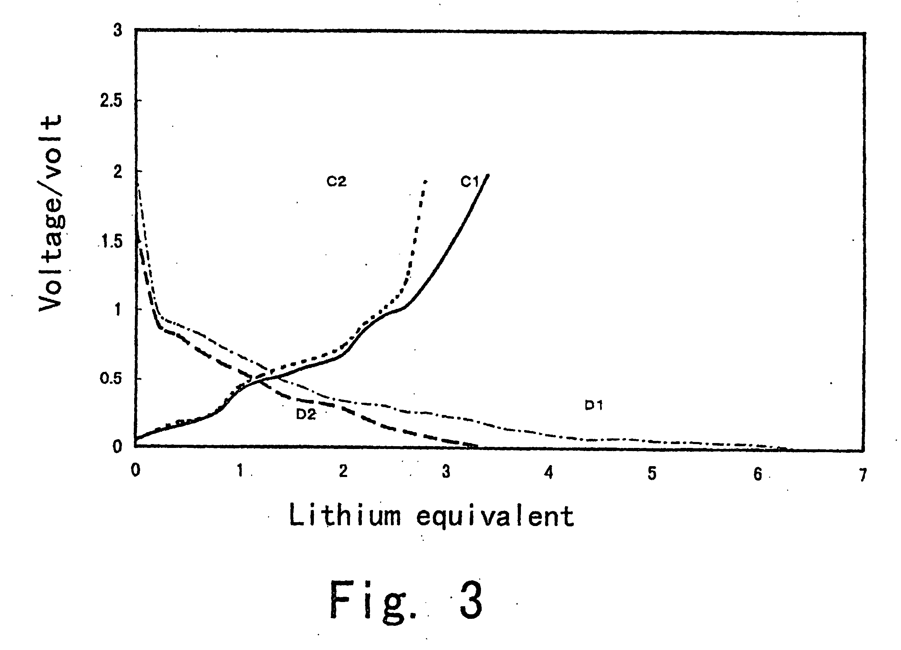

The test cell A thus prepared was subjected to a charge and discharge cycle under conditions of a constant current of 0.1 mA with a final voltage of 0 V of discharge (D) and a final voltage of 2.0 V of charge (C). The charge and discharge characteristics thus obtained are shown in Fig. 2. In the Figure, D1 shows a first discharge, D2 shows a second discharge, C1 shows a first charge and C2 shows a second charge. Similarly, charge and discharge characteristics of a test cell B in which a product obtained by grinding and grading commercially available SnO with an automatic mortar as an active material for the working electrode, are shown in Fig. 3. Comparing Fig. 2 and Fig. 3, it is seen that the charge and discharge after the second cycle are almost the same. It can thus be considered that the materials after charge and discharge are in practical terms the same.

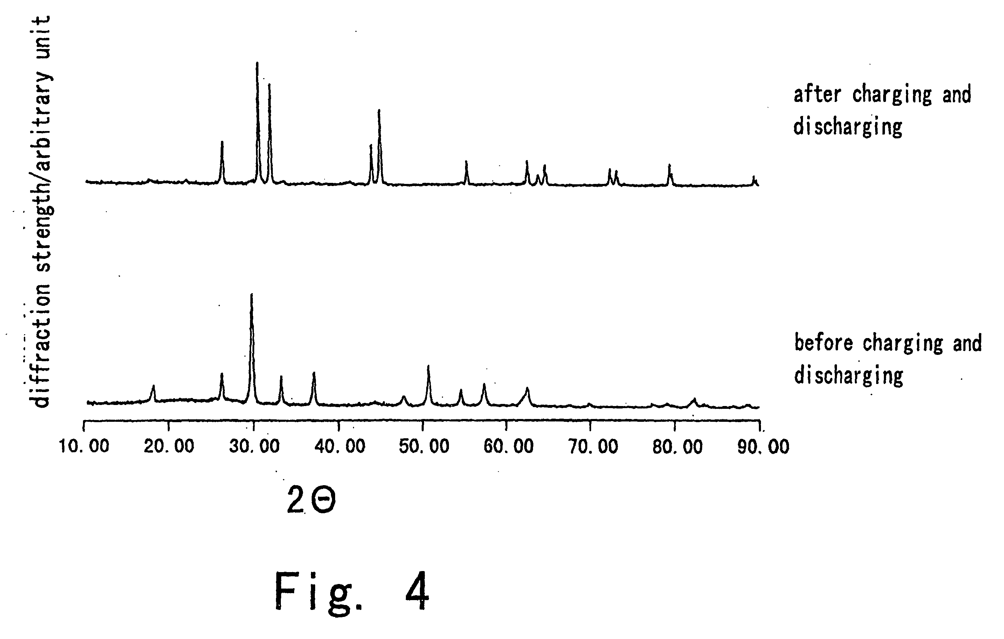

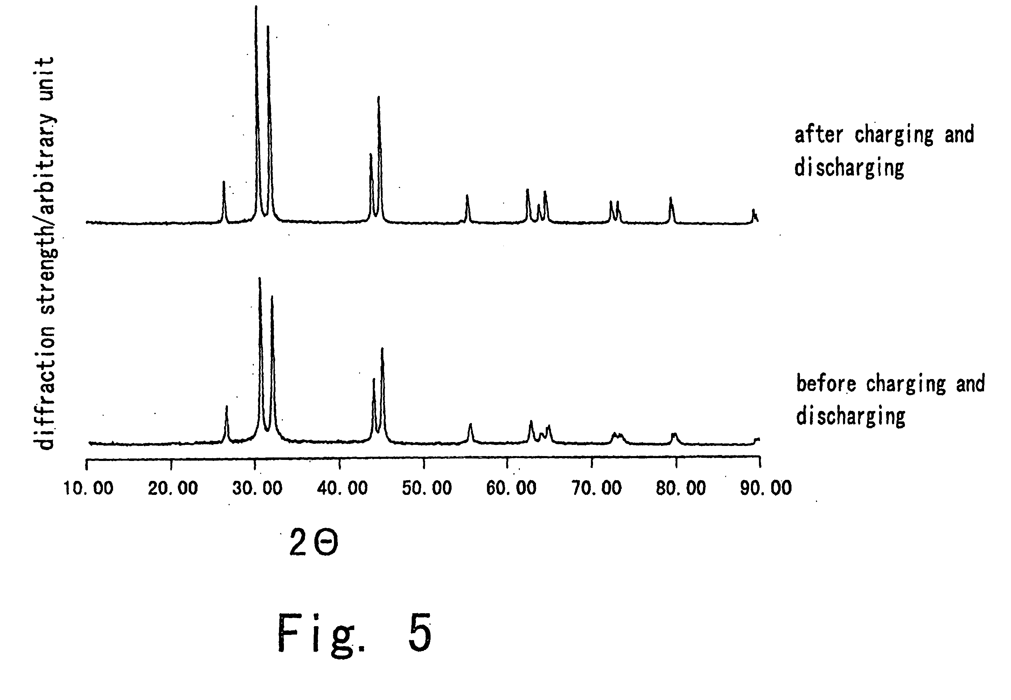

X-ray diffraction measurement results for SnO used as the working electrode of the test cell B both before and after charge and discharge are shown in Fig. 4. X-ray measurement results of Sn used as the working electrode of the test cell A are shown in Fig. 5. The measurement material was prepared by grinding with an agate mortar a working electrode taken from a battery, in a dry room with a dew point of 60°C. The lower chart, which is before charge and discharge, in Fig. 4 shows the result for SnO. The upper chart, which is after charge and discharge, shows the result for Sn. The charts show that SnO was reduced to Sn by incorporation into and release from the working electrode of lithium by deep charge and discharge. The peak in the vicinity of 27 degrees in the figure is due to graphite used as the conductive agent. It is similarly observed in other figures. On the other hand, Sn which is the working electrode shown in Fig. 5 shows effectively no change between the two charts, i.e., as a result of charge and discharge.

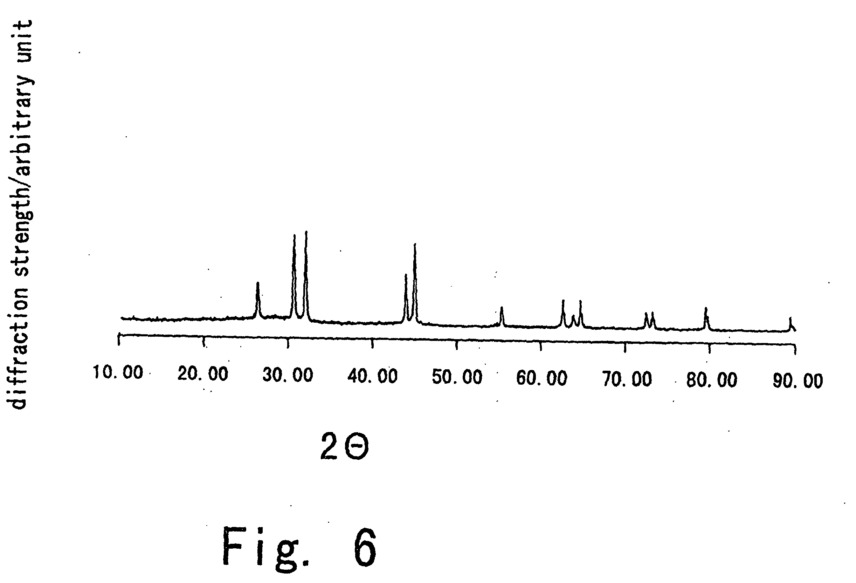

It is seen from the results that SnO changed its structure to Sn by deep charging and discharging, but no structural change of Sn was observed. In a further test lithium material having a diameter of 4 mm and a thickness of 0.3 mm was press bonded onto a SnO working electrode. The assembly was dipped in the electrolyte solution used in the test cell for 24 hours, followed by vacuum drying. X ray diffraction was conducted on the assembly thus treated. The results are shown in Fig. 6. It is seen that the SnO was changed to Sn. It is considered that where SnO becomes amorphous by contact with lithium, this cannot be measured with X ray diffraction. Therefore, analysis by FTIR was tried, but no SnO peak was observed. Thus, it appears that SnO is changed to metallic Sn where lithium is doped by deep charge and discharge and where SnO is contacted with lithium in the electrolyte solution. Therefore, it is seen from the charge and discharge curves and X ray diffraction of Figs. 2 and 3 that where SnO is used as a negative electrode, it should be used under the condition that Sn formation occurs. In an actual battery, metallic Sn formation can proceed positively by contacting lithium with SnO in the battery. This shows somewhat good charge and discharge characteristics as compared with the case of using Sn. It is considered that when SnO is reduced with lithium, a change in structure and volume is involved, so that fine structure formation occurs. This makes charge and discharge easy. Alternatively, there is the possibility that Li₂O is produced and provides a good influence on the charge and discharge cycle. In the handling of raw materials, using an oxide (SnO or SnO₂) rather than using a metallic Sn powder presents small danger of dust explosion or the like and is safe.

When tin is ground into a powder, and the powder is molded together with powdery carbon, having electrical conductivity, and a resin binder to form a negative electrode; the possibility of tin being liberated from the substrate and not participating in the charge and discharge cycle is decreased. As a result, the cycle characteristic is improved. For this reason, the particle size of tin is preferably 500 µm or less, more preferably 100 µm or less, and most preferably 50 to 0.1 µm. Its specific surface area is preferably 0.05 to 100 m²/g, more preferably 0.1 to 50 m²/g, and most preferably 0.1 to 30 m²/g. Such a fine powder may be used directly. But, it is also effective to use tin oxide such as SnO or SnO₂ as a starting material and reduce it by electrochemical reaction with lithium or a material containing lithium.

Where a transition metal composite oxide containing lithium capable of migrating in charge and discharge is used as a positive electrode active material; an electrode (negative electrode) is previously constituted using tin which does not contain lithium or contains lithium in a small amount (the lithium equivalent to tin is 1 or less). The electrode can be made as tin containing lithium by charging it using the same after assembling a battery. Therefore, there are advantages that it is not necessary to produce a battery using tin containing lithium (in large amount) which is oxidized with oxygen or moisture in the air and which is unstable. The production process and production facilities become simple and production costs are considerably reduced. Further, where a transition metal composite oxide which does not contain lithium capable of migrating in charge and discharge is used as a positive electrode active material; the material can be made as tin containing lithium by directly contacting lithium with a negative electrode active material.

In order to produce a battery using tin as a negative electrode; in which the center of service voltage range is from 2.7 V to 0.8 V, for example, which is charged at 2.5 V and is used at a final discharge voltage up to 1.2 V; it is desirable to use as a positive electrode a lithium-containing manganese oxide having a potential to lithium of 3V, represented by LixMnOy (x and y show atomic ratio, and y is 2 < y < 3). Part of the lithium represented by Lix migrates between the electrodes during charge and discharge of the battery. Lithium migrates in a negative electrode upon charging, and migrates in a positive electrode upon discharging.

The potential of this lithium-containing manganese oxide is somewhat too high to produce a battery that is charged at 2.5V using the combination with a tin negative electrode. Therefore, it is necessary to increase the amount of lithium incorporated into a positive electrode during discharge in order to decrease the potential of the electrode. The maximum amount of lithium equivalent mol (atomic ratio) to 1 mol of Mn, incorporated into a positive electrode in discharging is made to be 0.66 ≤ x ≤ 0.90. This results in a battery which can be charged at 2.5 V. Preferably, the range is 0.7 ≤ x ≤ 0.83. If x exceeds 0.83, lithium-containing manganese oxide undergoes structural changes, such as phase transition, and capacity decrease may occur. Actually, even if it is designed such that lithium is incorporated in an amount of 0.83 or more; the resistance of a positive electrode becomes high and it is difficult to incorporate 0.83 or more. Even if it is designed such that lithium is incorporated in an amount of about 0.9, there is no problem on battery performance. Further, a battery using Sn as an active material shows cycle deterioration. This is considered to be due to the fact that Sn deteriorates and lithium migration upon discharge decreases with an increasing number of cycles. Thus, it is effective to increase the lithium amount. When designing a battery, it is preferable to change lithium equivalent mol to 1 mol of Sn in a negative electrode from 2.3 to 4.5. The amount is preferably 3.0 or more. However, if it exceeds 3.6, there is a fear that explosion and ignition would occur when excessive voltage (about 12 V) is applied to a battery.

When the amount of lithium in lithium-containing manganese oxide is high the material has a high resistance value. Therefore, it is important to add a powdery carbon as a conductive assistant (in the proportion of 7% or more, and preferably 9% or more), thereby decreasing the resistance value of the positive electrode. Adding carbon that does not participate in charge sacrifices the battery capacity. Therefore, the upper limit of the amount of carbon to be added to a positive electrode may be determined, considering the battery capacity.

Embodiments of the present invention use a negative electrode comprising a powdery tin or tin alloy, a powdery carbon having an electrical conductivity, and a resin binder; a positive electrode having as an active material a metal oxide containing a transition metal as a constituent element; and a non-aqueous electrolyte with lithium ion conductivity comprising a dissolved lithium compound or a solid solubilized in an organic solvent.

The tin powder constituting the negative electrode is not particularly limited; but a powder prepared by, for example, grinding or atomizing method can be used.

Further, as the tin or tin alloy constituting a negative electrode; it is effective to reduce an oxide of tin by electrochemical reaction between the oxide of tin and lithium, or a material containing lithium, inside a battery after assembling the battery. Alternatively, it can be produced inside or outside the battery in the course of production of the battery. As a negative electrode material, tin and tin oxide may be mixed and used, or only part of the tin oxide may be reduced by lithium or lithium alloy and may be used as such.

Various compounds can be contained in the tin powder. For example; transition metals (elements of 4th, 5th and 6th Periods in the Periodic Table and elements belonging to III-A Group to II-B Group); elements belonging to IV-B Group; alkali metal (elements belonging I-A Group, II-A Group in the Periodic Table) or P, Cl, Br, I or F can be included in the tin alloy powder. The amount of the compounds to be added is preferably 0 to 20 mol%.

Where Sn is used, to 1 mol of Sn, the equivalent mol of lithium insertion in a negative electrode is preferably 2 to 4.5 mol. Where SnO is used, it is preferably 2.5 to 6.5 mol. Where SnO is used as a starting material for a negative electrode, it is reduced up to metallic Sn. In SnO, loss of release to lithium insertion in an initial charge and discharge cycle is about 1.5 mol to 1 mol of Sn. But, if the cycle is repeated, the loss is 2 mol or more than the case when metallic Sn is produced. The presence of metallic Sn is confirmed by X ray diffraction of Figs. 4, 5 and 6. It is unclear whether doping and undoping lithium in Sn is a doping in an ion state or whether alloyed Sn with lithium is formed.

It is needless to say that SnO₂ can also be utilized, but the loss amount of lithium is increased. The minimum constituent element of the negative electrode according to the present invention is a powdery tin or tin alloy, a powdery carbon with electron conductivity, and a resin binder. Fillers and/or various additives or the like may be added according to need. The lithium-containing manganese oxide which is the positive electrode material according to the present invention may contain at least one kind of transition metal elements, typical elements and rare earth elements to form a composite metal oxide or a mixture. Particularly preferable dopants are P, Co, Ni, Ti, V, Zr, Nb, Mo, W, Fe, Cr, and the like. A method of containing lithium in the positive electrode material is the electrochemical method.

Further, the positive electrode active materials that can be used in combination with Sn in the service voltage range of the present invention are NaCrS, TiO₂, VO₂, MoO₃, iron mixed valence complex (Prussian blue or the like), and the like in addition to lithium-containing manganese oxide having a potential to lithium of 3 V. Those lithium-containing compounds can also be used.

The average particle size of the positive electrode active material used in the present invention is preferably 500 µm or less, more preferably 100 µm or less, and most preferably 50 to 0.1 µm. The form of the active material is preferably a primary particle aggregate having an average particle size of 1 micron or more and 20 microns or less comprising an aggregate of primary particles having an average particle size of 0.1 micron or more and 2.5 microns or less. More preferably the material is a primary particle aggregate having an average particle size of 3.5 microns or more and 9.5 microns or less comprising an aggregate of primary particles having an average particle size of 0.1 micron or more and 2.5 microns or less. Further, in the above-mentioned primary particle aggregate; preferably 80% or more of the entire volume (more preferably 85% or more of the entire volume, and most preferably 90% or more of the entire volume) has a particle size of 1 micron or more and 15 microns or less. The specific surface area is preferably 0.05 to 100 m²/g, more preferably 0.1 to 50 m²/g, and most preferably 0.1 to 30 m²/g.

Materials which dope lithium in tin or tin oxide for use in the present invention are lithium metals, lithium alloys, and baked carbonaceous compounds which can absorb and release lithium ion or lithium metal. The purpose of using the above-mentioned lithium metal or lithium alloy together is to reduce oxides of tin or to dope lithium in tin in a battery.

The electrode can be in various shapes; such as plate-like, film-like, column-like or formation on a metal foil. When the battery is coin or button shaped, a mixture of positive electrode active materials or negative electrode active materials are mainly used by compressing them into the shape of a pellet. Further, when the battery is thin coin or button shaped, an electrode in sheet form can be punched and used. The thickness and diameter of the pellet are determined depending on the size of the battery.

Further, when the battery has a sheet, cylinder or rectangle shape; a mixture of positive electrode active materials or negative electrode active materials is mainly obtained by coating on a collector, drying and compressing. The thickness, length and width of the coating are determined depending on the size of the battery. However, the thickness of the coating is preferably 1 to 2,000 µm when compressed after drying. Generally employed methods can be used to form the pellet by pressing. In particular, a mold press method or calendar press method is preferable. The press pressure is not particularly limited, but 0.2 to 3 t/cm² is preferable. The press rate of the calendar press method is preferably 0.1 to 50 m/min. The press temperature is preferably from room temperature to 200 °C.

Conductive agents, binders, fillers or like can be added to the electrode mixture. The kind of conductive agent is not particularly limited, and metal powder may be used. However, carbonaceous materials are particularly preferable. Carbon materials are most general and natural graphite (flaky graphite, scaly graphite, soil graphite), artificial graphite, carbon black, channel black, thermal black, furnace black, acetylene black, carbon fiber and the like can be used. Further, metal powder such as copper, nickel, or silver, or metal fiber can be used as a metal. Conductive polymers can also be used.

The amount of carbon to be added is not particularly limited due to the fact that the mixing ratio differs depending on electrical conductivity of the active material, electrode shape, or the like. However, in the case of the negative electrode, 1 to 50% by weight is preferable, and 2 to 40% by weight is particularly preferable. In the case of the positive electrode, since it is necessary to decrease the resistance as much as possible; 7 to 50% by weight is preferable, and 9 to 40% by weight is particularly preferable.

It is preferable that the average particle size of the carbon is in the range of 0.5 to 50 µm, preferably in the range of 0.5 to 15 µm, and more preferably in the range of 0.5 to 6 µm. Thus, the contact property between active materials becomes good, network formation of electron conduction is increased, and active materials which do not participate in electrochemical reaction are decreased.

Binders are preferably materials that are insoluble in electrolyte solution, but they are not particularly limited. In general; polysaccharides, thermoplastic resins, thermosetting resins, polymers having rubber elasticity, and the like, such as polyacrylic acid and polyacrylic acid neutralized product, polyvinyl alcohol, carboxymethyl cellulose, starch, hydroxypropyl cellulose, regenerated cellulose, diacetyl cellulose, polyvinyl chloride, polyvinyl pyrolidone, tetrafluoroethylene, polyvinylidene fluoride, polyethylene, polypropylene, ethylene-propylene-diene polymer (EPDM), sulfonated EPDM, styrene butadiene rubber, polybutadiene, fluororubber, polyethylene oxide, polyimide, epoxy resin, phenol resin or the like, can be used alone or in mixtures. The amount of the binder to be added is not particularly limited, but 1 to 50% by weight is preferable. In particular, for the negative electrode, since structural change or volume change occurs with charge and discharge, a relatively large amount of 5 to 40% by weight is preferable.

Any fillers can be used so long as they are preferably fibrous materials which do not cause chemical change. In general, fibers of olefin polymers such as polypropylene or polyethylene, glasses, carbon, and the like can be used. The amount of filler to be added is not particularly limited, but 0 to 30% by weight is preferable.

The electrolyte solution is not particularly limited. Organic solvents used in conventional non-aqueous secondary battery can be used. Cyclic esters, chain esters, cyclic ethers, chain ethers, and the like can be used as the organic solvents. Examples thereof are organic solvents such as propylene carbonate (PC), ethylene carbonate (EC), butylene carbonate (BC), vinylene carbonate, dimethyl carbonate (DMC), diethyl carbonate (DEC), γ-butyrolactone (γBL), 2-methyl-γ-butyrolactone, acetyl-γ-butyrolactone, γ-valerolactone, 1,2-dimethoxyethane (DME), 1,2-ethoxyethane, diethyl ether, ethylene glycol dialkyl ether, diethylene glycol dialkyl ether, triethylene glycol dialkyl ether, tetraethylene glycol dialkyl ether, dipropyl carbonate, methylethyl carbonate, methylbutyl carbonate, methylpropyl carbonate, ethylbutyl carbonate, ethylbutyl carbonate, ethylpropyl carbonate, butylpropyl carbonate, propionic acid alkyl ester, maloic acid dialkyl ester, acetic acid alkyl ester, tetrahydrofuran (THF), alkyl tetrahydrofuran, diaklyalkyl tetrahydrofuran, alkoxytetrahydrofuran, dialkoxytetrahydrofuran, 1,3-dioxolane, alkyl-1, 3-dioxolane, 1, 4-dioxolane, 2-methyl tetrahydrofuran, dimethyl sulfoxide, 1, 3-dioxolane, formamide, dimethylformamide, dioxolane, acetonitrile, nitromethane, methyl formate, methyl acetate, methyl propionate, ethyl propionate, or phosphoric acid triester, and their derivatives or mixtures.

From the standpoint of suppressing the reduction decomposition reaction of the solvent; if an electrolyte solution having carbon dioxide gas (CO₂) dissolved therein is used, it is effective to increase capacity and cycle life. Main impurities present in the above-mentioned solvents (non-aqueous solvent) include water, and organic peroxides (for example, glycols, alcohols, carboxylic acids). It is considered that each of the above-mentioned impurities form an insulating coating on the surface of the graphitized product; thereby increasing interfacial resistance of the electrode. This provides the possibility of influencing a decrease in cycle life or capacity. Further, there is the possibility that self-discharge during storage can increase. Thus, it is preferable in the electrolyte solution containing non-aqueous solvent that the impurities are decreased as much as possible. More specifically, it is preferable that the water content is 50 ppm or less and organic peroxide is 1,000 ppm or less.

As a supporting salt, at least one kind of salt such as lithium perchlorate (LiClO₄), lithium hexafluorophosphate (LiPF₃), lithium borofluoride (LiBF₄), lithium hexafluoroarsenate (LiBF₄), lithium trifluorometasulfonate (LiCF₃SO₃), lithium bistrifluoromethylsulfonyl imide [LiN(CF₃SO₂)₂], thiocynate or aluminum fluoride can be used. It is desirable that the dissolution amount to the non-aqueous solvent is 0.5 to 3.0 mol/l.

According to the present invention, a battery production was conducted with an electrolyte solution containing EC, DEC (1 : 2) and 1M of LiClO₄, and a good result was obtained. But, in the cycle test after 80°C storage, deterioration was large. When the battery was dismantled and X ray diffraction of the negative electrode active material was conducted, Sn formation was recognized. However, as a result of observation with an optical nicroscope, it was found that many needle-like (whisker) Sn structures were present. Since needle-like Sn does not have contact with graphite added as the conductive agent, it is considered that deterioration occurs. Similar deterioration tends to occur in DMC and EMC that are chain carbonate, other than DEC.

Where battery production was conducted with an electrolyte solution containing γ-BL, EC, DME (1 : 1 : 2) and 1M of LiClO₄, good results were obtained in the cycle test after storage at normal temperature and 80 °C. Where battery production was conducted with an electrolyte solution containing EC, DME (1 : 2) and 1M of LiClO₄, there was slight deterioration in the cycle test after storage at normal temperature and 80 °C, but generally good results were obtained. Where the described electrolyte solution was used, there was no explosion or ignition even if high voltage (for example 12 V) was applied to the battery. It was safe.

Further, besides an electrolyte solution, the following solid electrolytes can be used. The solid electrolyte may be distinguished as an inorganic solid electrolyte or an organic solid electrolyte. Nitride of Li, halide, oxyacid salt, and the like are well known as inorganic solid electrolytes. Polyethylene oxide derivatives or polymers containing the derivatives, polypropylene oxide derivatives or polymers containing the derivatives, phosphoric acid ester polymers, and the like are effective as the organic solid electrolyte. A method of using inorganic and organic solid electrolytes together is known.

An insulating thin film having a large ion permeability and also having a predetermined mechanical strength can be used as the separator. From the standpoints of organic solvent resistance and hydrophobicity; sheets or non-woven fabrics made from olefin polymers such as polypropylene, glass fibers or polyethylene are generally used. The pore size of the separator is in the range generally used for batteries. For example, 0.01 to 10 µm may be used. The thickness of the separator is the range generally used for batteries, for example 5 to 300 µm. Further, it is effective as a safe countermeasure to use a separator in which the ion permeability is changed depending on temperature.

Further, additives may be added for the purpose of improving discharge or charge and discharge characteristics. They may directly be added to the active material, but a method of adding them to the electrolyte solution is most generally used. For example, the additives may be toluene, pyridine and the like.

Further, in order to make the electrolyte solution incombustible; for example, carbon tetrachloride or ethylene trifluorochloride may be added to the electrolyte solution.

Further, the electrolyte solution or electrolyte can be contained in the mixture of the positive electrode or the negative electrode. For example, a method of containing the above-mentioned polymer with ion conductivity or nitromethane is known from Japanese Patent Application Laid-open No. Sho 48-36633. In relation to the electrolyte, a method is known from Japanese Patent Application Laid-open No. Sho 57-124870.

As the collector for the electrode active material; a metal plate or a metal foil having a small electric resistance is preferable. For example; besides stainless steel, nickel, aluminum, titanium, tungsten, gold, platinum, baked carbon and the like, aluminum or stainless the surface of which is treated with carbon, nickel, titanium or silver, can be used as a material for the positive electrode. Two-phase stainless steel is effective against corrosion. In the case of a coin or button shaped battery, nickel plating can be conducted for the outer portion of the battery. The treating method includes wet plating, dryplating, CVD, PVD, clad formation with press-fixing, coating, and the like.

Besides stainless steel, nickel, copper, titanium, aluminum, tungsten, gold, platinum, baked carbon and the like, copper or stainless steel the surface of which is treated with carbon, nickel, titanium or silver, Al-Cd alloy and the like, can be used as the material for the negative electrode. The treating method includes wet plating, dry plating, CVD, PVD, clad formation with press-fixing, coating, and the like.

The surface of those materials is sometimes oxidized, but benzotriazole, triazine thiol, alkyl thiol, fluorine type water repellent, silicon type water repellent and the like can be used as an anti-rust treatment. The shape is foil, can , film, sheet, net, punched product, lathe product, porous material, foamed product, molded article of fibers, or the like. The thickness is not particularly limited. For mounting to a substrate a terminal can be fixed by resistance welding, laser welding or the like. Materials for the terminal include stainless steel, stainless-nickel clad material, stainless steel having nickel or gold plated thereon, and the like. They are not particularly limited so long as they are metal.

It is possible to fix the electrode active material and the collector with a conductive adhesive. A material prepared by adding a powder of carbon or metal, or fiber to a resin dissolved in a solvent, a material prepared by dissolving a conductive polymer, or the like can be used as the conductive adhesive.

In the case of a pellet-like electrode, the adhesive can be coated between the collector and the electrode pellet to fix an electrode. The conductive adhesive in this case often contains a thermosetting resin. In the case of a sheet-like electrode, the adhesive is used for the purpose of electrical connection, rather than physical adhesion of the collector and the electrode.

For coin or button shaped batteries, polypropylene, polyethylene, polyamide resin and various engineering plastics can be used as the gasket. In general, a polypropylene-made gasket is used. But, materials such as engineering plastics having a high heat resistant temperature may be used in order to cope with the reflow temperature in mounting a battery on a substrate.

In the case of a coin or button shaped battery, a sealing compound of one kind or a mixture of asphalt pitch, butyl rubber, fluororubber, chlorosulfonated polyethylene, epoxy resin, and the like is used between the gasket and positive and negative cans. Where the sealing compound is transparent, it may be colored to clarify the presence or the absence of the coating. As a method of coating the sealing compound, the following can be used: injection of the sealing compound in a gasket; coating on positive and negative cans; dipping a gasket in a sealing compound solution; and the like.

The shape of the battery can be coin, button, sheet, cylinder, rectangle and the like.

The purpose of use of the non-aqueous secondary battery of the present invention is not particularly limited, and includes, for example, portable telephone, backup electric power supply for pager or the like, electric power supply of wrist watch having a generator function, and the like.

It is desirable that the battery of the present invention is assembled in a moisture-free atmosphere or inert gas atmosphere. Further, it is preferable that the parts to be assembled are dried beforehand. Methods generally employed can be utilized as drying or water-removal methods for the pellet, sheet or other parts. In particular, it is preferable to use hot air, vacuum, infrared ray, far infrared ray, electron beam and low moisture air, alone or in combination thereof. The temperature is preferably in the range of 80 to 350°C, and in particular, the range of 100 to 250°C is preferable. Water content is preferably 2,000 ppm or less in the entire battery. It is preferable in a positive electrode mixture, a negative electrode mixture or the electrolyte that the water content is 20 ppm or less, respectively, from the point of improved cycle characteristic.

The present invention is explained in further detail by the examples below.

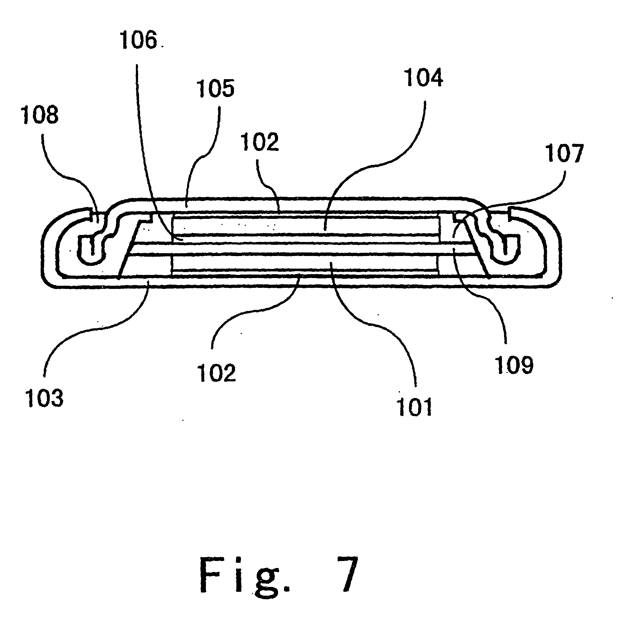

The present examples are examples in which lithium containing manganese oxide is used as a positive electrode active material, and Sn is used as a negative electrode active material. The positive electrode, negative electrode and electrolyte solution prepared as below were used. The size of the battery outer diameter was 6.8 mm and thickness of 2.1 mm. A cross sectional view of the battery is shown in Fig. 7.

A positive electrode was prepared as follows. Graphite as a conductive agent and polyacrylic acid as a binder were mixed with a powder prepared by grinding commercially available Li_{0.36}Mn_{2.43} (containing P) in the weight ratio of Li_{0.36}Mn_{2.43} : graphite : polyacrylic acid = 88.5 : 9 : 2.5, to prepare a positive electrode mixture. This positive electrode mixture was press-molded with 2 ton/cm² into a pellet having a diameter of 4.05 mm. The positive electrode pellet 101 thus obtained was adhered to a positive electrode case 103 using an electrode collector 102 comprising a conductive resin adhesive containing carbon to form an unitary body. The resulting unitary body was heated and dried at 150°C for 8 hours under reduced pressure.

A negative electrode was prepared as follows. A powder obtained by grinding and grading commercially available Sn or SnO with an automatic mortar to a diameter of 44 µm or less was used as an active material of the working electrode. With this active material, graphite as a collector and polyacrylic acid as a binder were mixed in a weight ratio of 70.5 : 21.5 7, respectively, to prepare a negative electrode mixture. This mixture was press-molded into a pellet having a diameter of 4.05 mm with 2 ton/cm². The negative electrode pellet 104 thus obtained was adhered to a negative electrode case 105 using an electrode collector 102 comprising a conductive resin binder containing carbon as a conductive filler, to form a unitary body. The resulting unitary body was heated and dried at 150 °C for 8 hours under reduced pressure. Further, a product obtained by punching a lithium foil 106 with a diameter of 4 mm was press fixed to the pellet to form a lithium-negative electrode laminate battery.

In Examples 1 to 4, a battery was prepared in the manner such that equivalent mol of Li to 1 mol of Mn of the positive electrode was increased. The actual equivalent of Li to Mn 1 mol of the positive electrode is shown in the right-hand column of Table 1.

An electrolyte solution 107 used was a solution prepared by dissolving 1 mol/l of LiClO₄ in a mixed solvent of γ-BL, EC and DME in a volume ratio of 1 : 1 : 2.

A charge and discharge cycle test was conducted on the battery thus prepared under the conditions of discharging at a constant current of 50 µ A with a final voltage of 1.2 V and charging by maintaining a constant current of 50 µ A with a final voltage of 2.5 V for 24 hours.

**TABLE 1**

| Example No. | Negative electrode active material | Mass of negative electrode active material (mg) | Mass of positive electrode active material (mg) | Lithium thickness (mm) | Li equivalent mol to positive electrode Mn |
|---|---|---|---|---|---|
| 1 | Sn | 6.4 | 26.4 | 0.25 | 0.62 |
| 2 | Sn | 8.9 | 17.6 | 0.31 | 0.76 |
| 3 | Sn | 9.9 | 15.0 | 0.34 | 0.81 |
| 4 | Sn | 10.1 | 14.2 | 0.35 | 0.84 |
| 5 | SnO | 9.3 | 26.4 | 0.25 | 0.63 |
| 6 | SnO | 12.8 | 17.6 | 0.31 | 0.74 |
| 7 | SnO | 14.3 | 15.0 | 0.34 | 0.83 |
| 8 | SnO | 14.6 | 14.2 | 0.35 | 0.84 |

The equivalent mol of Li to 1 mol of Mn of the positive electrode was calculated from the results obtained by conducting quantitative analysis by plasma emission spectroscopy as follows, and was described in the Table. Discharging 5th cycle of each battery was performed up to 0.0 V, and the battery was then overhauled to pick up a positive electrode. The positive electrode picked up was washed with ethyl methyl carbonate, and filtered, followed by drying, and plasma emission spectroscopy was conducted. It can be considered that this lithium amount is almost the maximum to be incorporated in the positive electrode upon general charging and discharging.

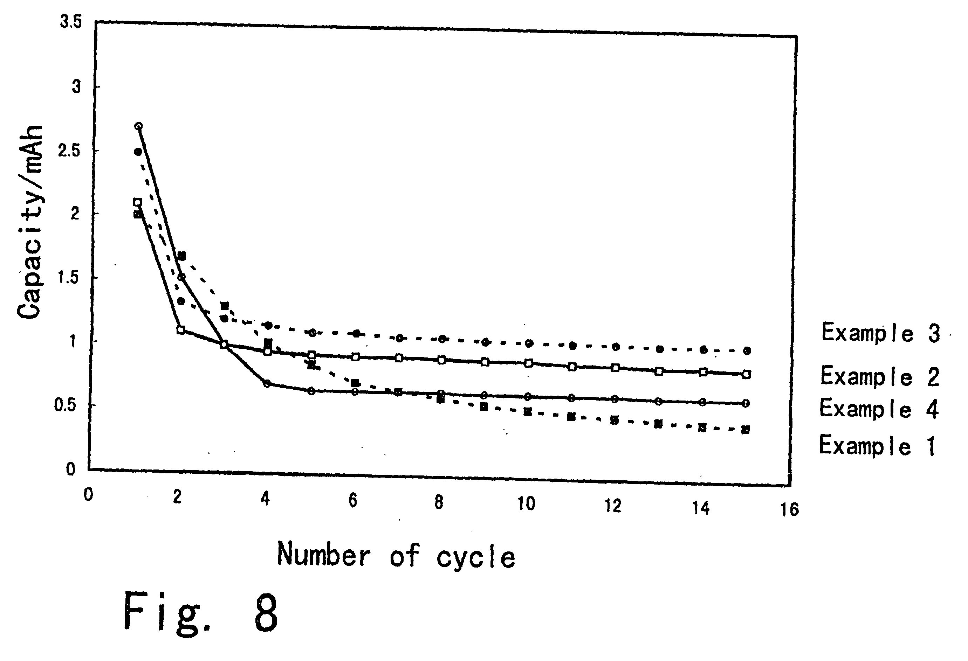

The number of cycles and change of discharge capacity where Sn was used as an active material are shown in Fig. 8. Example 1 is the case that lithium amount to a positive electrode is small. Considering the respective electrode in the inside of the battery; since the amount of lithium which moves between the electrodes is small, the positive electrode and also the negative electrode utilize a portion having high potential. In particular, a portion having high potential in the negative electrode is a region in which the cycle is unstable. Therefore deterioration of capacitance by the cycle is large.

In examples 2 and 3 lithium to a positive electrode is increased. Lithium incorporated in the positive electrode at the 1st discharge is larger than that incorporated at the 2nd discharge or after. Lithium corresponding to the difference of capacity between the 1st discharge and the 2nd discharge remains in the positive electrode at the 1st discharge, and does not participate in the subsequent discharge. However, as a result, since this lithium decreases the potential of the positive electrode, a stable region having lower potential than the negative electrode can be utilized. For this reason, cycle deterioration after the 2nd discharge is small.

Example 4 is the case that lithium to the positive electrode is further increased. Lithium which can further be incorporated in a positive electrode on the design of the battery is incorporated into the battery (a design such that Li equivalent mol to 1 mol of Mn of positive electrode is 0.91). However, actually the resistance of the positive electrode increases, and it is considered that lithium corresponding to the increased portion is not incorporated in the positive electrode. (As a result of analysis, Li equivalent mol to 1 mol of Mn of positive electrode was incorporated only 0.84 as shown in Table 1). For this reason, the capacity is somewhat low.

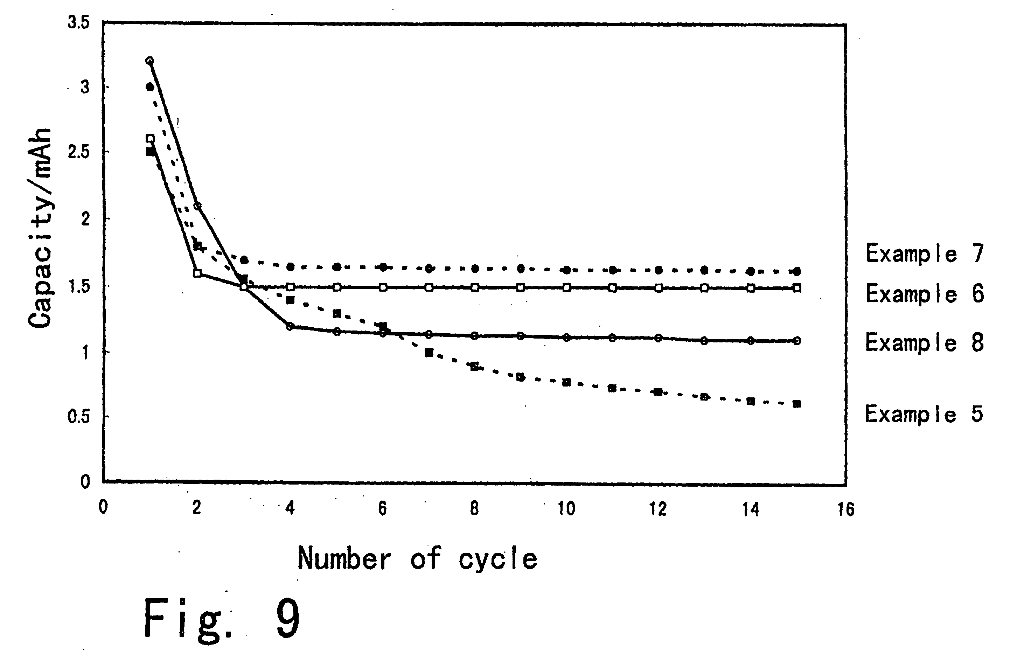

The number of cycles and change of discharge capacity where SnO was used as an active material are shown in Fig. 9. It is considered that the mechanism of cycle characteristics is the same as in the case of Sn. Probably due to fine grinding when SnO is converted in Sn, the capacity is large as compared with Fig. 8.

As described in detail above, the present invention provides a non-aqueous electrolyte secondary battery, characterized by using a negative electrode comprising a powdery tin or tin alloy, a powdery carbon with electron conductivity and a resin binder, a positive electrode having as an active material a metal oxide containing a transition metal as a constituent element, and a non-aqueous electrolyte with lithium ion conductivity comprised of a lithium compound dissolved or solid solubilized in an organic solvent. In particular, a battery having excellent characteristics can be obtained by using tin obtained by reducing oxide of tin with lithium, as a negative electrode active material.

Further, where such a battery is charged at 2.5 V and used at a final discharge voltage up to 1.2 V, using lithium-containing manganese oxide LiₓMnO_{y} (2 ≤ y ≤ 3) as a positive electrode; a battery having excellent cycle characteristics can be produced by making that the maximum amount of lithium incorporated in the positive electrode 0.66 ≤ x ≤ 0.90. In this case, cycle characteristics are further improved by the proportion of powder carbon added as an electron conductive assistant to the positive electrode.

Further, if an electrolyte solution is used which contains 1,2-dimethoxy ethane, ethylene carbonate and lithium compound as essential elements, and contains γ -butyrolactone as an selective element; the high temperature dependence characteristic is improved, and safety in avoiding explosion is improved should a high voltage be applied.

## Claims

1. A non-aqueous electrolyte secondary battery, **characterized by** using a negative electrode comprising a powdery tin or tin alloy which is obtained by reducing oxide of tin by electrochemical reaction of oxide of tin with lithium or material containing lithium inside a battery after assembling the battery, or inside or outside the battery in the course of battery production, a powdery carbon with electron conductivity and a resin binder, a positive electrode having as an active material a metal oxide containing a transition metal as a constituent element, and a non-aqueous electrolyte with lithium ion conductivity comprised of a lithium compound dissolved or solid solubilized in an organic solvent.

2. A non-aqueous electrolyte secondary battery as claimed in claim 1, wherein the positive electrode has as an active material a metal oxide which is represented by an atomic ratio of Li:Mn:O = x:1:y (2<y<3), and the maximum value which the atomic ratio of Li can have in discharging is in the range of 0.66 < x < 0.90.

3. A non-aqueous electrolyte secondary battery as claimed in claim 1 or claim 2, **characterized in that** the negative electrode is one in which lithium is incorporated in a negative electrode substrate by electrochemical reaction of the negative electrode substrate containing tin or tin alloy, electron conductive powder and the resin binder, the compositional ratio of lithium and tin, Li/Sn, being 1 or less, with lithium or a material containing lithium.

4. A non-aqueous electrolyte secondary battery as claimed in any one of the preceding claims, **characterized in that** the voltage of the battery in service is 2.7 V to 0.8 V.

5. A non-aqueous electrolyte secondary battery as claimed in claim 2, **characterized in that** the proportion of the powdery carbon added to the positive electrode as an electron conductive assistant is 7% or more.

6. A non-aqueous electrolyte secondary battery as claimed in any one of the preceding claims, **characterized in that** 1,2-dimethoxyethane and a lithium compound are contained as the essential element of the non-aqueous electrolyte with lithium ion conductivity comprised of the lithium compound dissolved or solid solubilized in the organic solvent or polymer, and γ-butyrolactone is contained as an optional element.

## Patentansprüche

1. Sekundärbatterie mit nichtwässrigem Elektrolyt, **gekennzeichnet durch** die Verwendung einer negativen Elektrode, die in Pulverform Zinn oder eine Zinnlegierung, die erhalten wird **durch** Reduzieren eines Zinnoxids mittels elektrochemischer Reaktion des Zinnoxids mit Lithium oder einem Lithium enthaltenden Material innerhalb einer Batterie nach dem Zusammenbau der Batterie, oder innerhalb oder außerhalb der Batterie im Verlauf der Batterieherstellung, einen pulverigen Kohlenstoff mit Elektronenleitfähigkeit, sowie ein Harzbindemittel umfasst, einer positiven Elektrode, die als aktives Material ein Metalloxid aufweist, das ein Übergangsmetall als ein Bestandteilelement enthält, und eines nichtwässrigen Elektrolyts mit Lithiumionen-Leitfähigkeit, das eine Lithiumverbindung umfasst, die in einem organischen Lösungsmittel gelöst oder festlöslich gemacht ist.

2. Sekundärbatterie mit nichtwässrigem Elektrolyt nach Anspruch 1, bei der die positive Elektrode als aktives Material ein Metalloxid aufweist, das durch ein Atomverhältnis von Li:Mn:O = x:1:y (2 < y < 3) repräsentiert wird, wobei der maximale Wert, den das Atomverhältnis von Li beim Entladen aufweisen kann, im Bereich von 0,66 < x < 0,90 liegt.

3. Sekundärbatterie mit nichtwässrigem Elektrolyt nach Anspruch 1 oder Anspruch 2, **dadurch gekennzeichnet, dass** die negative Elektrode eine Elektrode ist, in der Lithium in ein Negativelektroden-Substrat mittels elektrochemischer Reaktion des Negativelektroden-Substrats, das Zinn oder eine Zinnlegierung, ein elektronenleitendes Pulver und das Harzbindemittel enthält, eingebaut ist, wobei das Zusammensetzungsverhältnis von Lithium und Zinn Li/Sn gleich 1 oder kleiner ist, mit Lithium oder einem Lithium enthaltenden Material.

4. Sekundärbatterie mit nichtwässrigem Elektrolyt nach irgendeinem der vorangehenden Ansprüche, **dadurch gekennzeichnet, dass** die Spannung der Batterie im Betrieb gleich 2,7 V bis 0,8 V ist.

5. Sekundärbatterie mit nichtwässrigem Elektrolyt nach Anspruch 2, **dadurch gekennzeichnet, dass** der Anteil des pulverigen Kohlenstoffes, der zur positiven Elektrode als ein elektronenleitender Hilfsstoff zugegeben ist, gleich 7 % oder mehr ist.

6. Sekundärbatterie mit nichtwässrigem Elektrolyt nach irgendeinem der vorangehenden Ansprüche, **dadurch gekennzeichnet, dass** 1,2-Dimethoxyethan und eine Lithiumverbindung als das wesentliche Element des nichtwässrigen Elektrolyts mit einer Lithiumionen-Leitfähigkeit enthalten ist, das die gelöste Lithiumverbindung umfasst, die in einem organischen Lösungsmittel oder Polymer gelöst oder festlöslich gemacht ist, wobei γ-Butyrolacton als optionales Element enthalten ist.

## Revendications

1. Batterie secondaire à électrolyte non aqueux, **caractérisée par** l'utilisation d'une électrode négative comprenant de l'étain ou un alliage d'étain en poudre, que l'on obtient par réduction d'oxyde d'étain par une réaction électrochimique d'oxyde d'étain avec du lithium ou un matériau contenant du lithium à l'intérieur d'une batterie après assemblage de la batterie, ou à l'intérieur ou à l'extérieur de la batterie au cours de la fabrication de la batterie, du carbone en poudre présentant une conductivité électronique et un liant de type résine, une électrode positive ayant en tant que matière active un oxyde métallique contenant un métal de transition en tant qu'élément constitutif, et un électrolyte non aqueux ayant une conductivité de l'ion lithium, constitué d'un composé du lithium dissous ou solide solubilisé dans un solvant organique.

2. Batterie secondaire à électrolyte non aqueux selon la revendication 1, dans laquelle l'électrode positive comprend en tant que matière active un oxyde métallique qui est **caractérisé par** un rapport atomique Li:Mn:O = x:1:y (2<y<3), et la valeur maximale que peut avoir le rapport atomique de Li lors de la décharge est comprise dans la plage 0,66<x<0,90.

3. Batterie secondaire à électrolyte non aqueux selon la revendication 1 ou 2, **caractérisée en ce que** l'électrode négative est une électrode négative dans laquelle du lithium est incorporé dans un substrat d'électrode négative par une réaction électrochimique du substrat d'électrode négative contenant de l'étain ou un alliage d'étain, une poudre électro-conductrice et le liant de type résine, le rapport de composition du lithium à l'étain, Li/ Sn, étant de 1 ou moins, avec du lithium ou un matériau contenant du lithium.

4. Batterie secondaire à électrolyte non aqueux selon l'une quelconque des revendications précédentes, **caractérisée en ce que** la tension de la batterie en cours d'utilisation est de 2,7 à 0,8 V.

5. Batterie secondaire à électrolyte non aqueux selon la revendication 2, **caractérisée en ce que** la proportion du carbone en poudre ajouté à l'électrode positive en tant qu'auxiliaire électro-conducteur est de 7 % ou plus.

6. Batterie secondaire à électrolyte non aqueux selon l'une quelconque des revendications précédentes, **caractérisée en ce que** du 1,2-diméthoxyéthane et un composé de lithium sont présents en tant qu'éléments essentiels de l'électrolyte non aqueux ayant une conductivité de l'ion lithium, constitué du composé de lithium dissous ou solide solubilisé dans le solvant organique ou un polymère, de la γ-butyrolactone étant présente en tant qu'élément en option.
